**Europäisches Patentamt**

**European Patent Office**

**Office européen des brevets**

(19)

(11) Veröffentlichungsnummer: **0 190 806**

**A2**

(12) # EUROPÄISCHE PATENTANMELDUNG

(21) Anmeldenummer: 86200165.8

(22) Anmeldetag: 06.02.86

(51) Int. Cl.⁴: **H 04 M 19/04**

(30) Priorität: 08.02.85 DE 3504243

(43) Veröffentlichungstag der Anmeldung:
13.08.86 Patentblatt 86/33

(84) Benannte Vertragsstaaten:
DE FR GB SE

(71) Anmelder: Philips Patentverwaltung GmbH
Billstrasse 80
D-2000 Hamburg 28(DE)

(84) Benannte Vertragsstaaten:
DE

(71) Anmelder: N.V. Philips' Gloeilampenfabrieken
Groenewoudseweg 1
NL-5621 BA Eindhoven(NL)

(84) Benannte Vertragsstaaten:
FR GB SE

(72) Erfinder: Hirth, Peter, Dipl.-Ing.
Lammersstrasse 6
D-8520 Erlangen(DE)

(72) Erfinder: Grucza, Hubert
Friedrichstrasse 8
D-8500 Nürnberg 10(DE)

(72) Erfinder: Frerichs, Werner, Dipl.-Ing.
Kolpingstrasse 41
D-8501 Eckental/Forth(DE)

(74) Vertreter: Dreykorn-Lindner, Werner et al,
Philips Patentverwaltung GmbH Postfach 10 51 49
Billstrasse 80
D-2000 Hamburg 28(DE)

(54) **Verfahren und Schaltungsanordnung zur Erzeugung eines Akustischen Rufsignals in Teilnehmerendstellen von Fernmeldeanlagen.**

(57) Bei bekannten elektronischen Tonrufschaltungen wird aus dem über eine Teilnehmerleitung einer teilnehmerendstell zugeführten Rufwechselstrom mittels einer Gleichrichter anordnung die Versorgungsspannung für eine Tonanrufschaltung, einen tonfrequenten Schwingungserzeuger und ein akustisches Signalelement erzeugt. Die Tonanrufschaltung dient zur Unterscheidung zwischen gültigen und ungültigen Rufsignalen und steuert den tonfrequenten Schwingungserzeuger.

Um nun den hierfür erforderlichen Schaltungsaufwand in der Teilnehmerendstelle zu verringern und gleichzeitig die Falschauslösung eine akustischen Rufsignals durch Störspannungen zu vermeiden, wird als Tonanrufschaltung ein Microprozessor, welcher in ansich bekannter Weise Anzeigeeinrichtungen, Wähleinrichtung, Speicher in Abhängigkeit von an einem Tastenfeld eingegebenen Bedienfunktionen steuert, verwendet. Als tonfrequenter Schwingungserzeuger, wird weiterhin ein von einem Microprozessor steuerbarer tonfrequenter Schwingungserzeuger, welcher beispielsweise zur Erzeugung von mehrfrequenzkodierten Wählzeichen dient, verwendet.

Verfahren und Schaltungsanordnung zur Erzeugung eines
akustischen Rufsignals in Teilnehmerendstellen von Fernmeldeanlagen

Die Erfindung betrifft ein Verfahren zur Erzeugung eines
akustischen Rufsignals in Teilnehmerendstellen von Fernmeldeanlagen gemäß dem Oberbegriff des Patentanspruchs
1.

In Fernmeldeanlagen werden Teilnehmerendstellen von der
Vermittlungsstelle aus gerufen, indem die Vermittlungsstelle der Speisegleichspannung eine Rufwechselspannung
überlagert.

In Fernsprechapparaten mit Wechselstromweckern wird die
Rufwechselspannung, welche z.B. in Deutschland eine Frequenz von 25 Hz aufweist, über einen Kondensator dem
Wechselstromwecker zugeführt. Wird der Handapparat vom
Teilnehmer abgehoben so wird mittels des Gabelumschalters
der Schleifenweg über die Teilnehmerleitung geschlossen,
das Fließen des Schleifengleichstroms in der Vermittlungsstelle detektiert und der Rufwechselstrom abgeschaltet.

Anstelle des Wechselstromweckers wird in modernen Fernsprechapparaten eine elektronische Schaltung zur Erzeugung des akustischen Rufsignals eingesetzt. Zur Stromversorgung der elektronischen Schaltung wird die gleichgerichtete Rufwechselspannung verwendet. Im einfachsten
Fall ist hierfür ein Gleichrichter vorgesehen, welchem
ein Siebkondensator nachgeschaltet ist. Die so erzeugte
Gleichspannung dient zur Speisung eines elektronischen
Schwingungserzeugers, der wiederum einen Lautsprecher zur
Schallabgabe ansteuert.

Aus "Electronik 1/15.01.1982, Seiten 53 bis 58, "Microcomputergesteuerter Tastwahl-Fernsprechapparat mit Flüssigkristallanzeige", Joachim Hollmann" ist ein Tastwahl-
Fernsprechapparat bekannt, welcher für die Erzeugung des
akustischen Rufsignals eine elektronische Tonrufschaltung
(Tonruf-IC) aufweist. Das Tonruf-IC erzeugt drei Frequenzen: 800, 1067 und 1333 Hz, welche zyklisch umgetastet
und auf einen Lautsprecher gegeben werden. Umtastfrequenz
und Lautstärke können vom Teilnehmer eingestellt werden.
Neben der Tonrufschaltung ist im Tastwahlfernsprechapparat eine Wähleinheit und eine Sprechschaltung angeordnet.
Für die Steuerung der Wähleinheit in Abhängigkeit von der
über den Tastensatz eingegebenen Wahlinformation ist ein
Microcomputer vorgesehen, welcher auch Anzeigeeinrichtungen und Speichereinrichtungen zur Aufnahme von Rufnummern
oder dergleichen steuert. Werden die Wählzeichen nach dem
Mehrfrequenzverfahren (MFV) erzeugt, so ist weiterhin im
Tastwahl-Fernsprechapparat eine integrierte Schaltung angeordnet, welche von dem Tastensatz angesteuert wird und
bei jedem Tastendruck die beiden Frequenzen (Zeilen- und
Reihenfrequenz) erzeugt, welche über die Teilnehmerleitung zur Vermittlungsstelle übertragen werden. Für die
Erzeugung der Frequenzen der MFV-Wahlzeichen und für das
akustische Rufsignal sind in der vorgenannten Schaltungsanordnung jeweils getrennte IC mit zugehörendem Quarz-
bzw.Keramikschwinger vorgesehen.

Aus der DE-AS 28 16 782 ist eine Schaltungsanordnung zum
Erzeugen eines akustischen Rufsignals in Teilnehmerstationen von Fernmeldeanlagen bekannt. In der Teilnehmerendstelle ist eine Gleichrichteranordnung vorgesehen,
welche aus dem über die Teilnehmerleitung zugeführten
Rufwechselstrom durch Gleichrichten die Versorgungsspannung für eine Umschalteinrichtung (Tonanrufschaltung), einen tonfrequenten Schwingungserzeuger (Multivibratoren) und ein akustisches Signalelement (Piezowandler) erzeugt. Um die Versorgungsleistung für die Schaltungsanordnung möglichst gering zu halten, wird der Piezowandler mittels der Umschalteinrichtung entweder mit Ladepotential oder mit Entladepotential verbunden. Die von den Multivibratoren gelieferten Frequenzen steuern die Umschalteinrichtung, wobei in Abhängigkeit von einer der Frequenzen eine Umschaltung zwischen den beiden anderen Frequenzen vorgenommen wird. Diese bekannte Schaltungsanordnung erfordert zwar einen geringen Schaltungsaufwand in der Teilnehmerendstelle, weist aber den Nachteil auf, daß durch Störspannungen das akustische Rufsignal ausgelöst werden kann.

Aus der Internationalen Anmeldung mit dem Deutschen Aktenzeichen P 30 49 811.4 ist ein elektronischer Tonwekker bekannt, welcher eine Fühleinrichtung (Tonanrufschaltung) zur Unterscheidung zwischen gültigen und ungültigen Rufsignalen aufweist und bei dem die Tonanrufschaltung einen Oszillator-Generator mit Frequenzbestimmungseinrichtung (tonfrequenten Schwingungserzeuger) und eine Ausgangsschaltung mit elektroakustischem Wandler (akustisches Signalelement) steuert. Die daraus bekannte Tonrufschaltung weist den Nachteil auf, daß der hierfür erforderliche Schaltungsaufwand in der Teilnehmerendstelle sehr hoch ist.

Der Erfindung liegt die Aufgabe zugrunde, ein Verfahren anzugeben, welches einen möglichst geringen Schaltungsaufwand in der Teilnehmerendstelle erfordert und bei dem zugleich die Falschauslösung eines akustischen Rufsignals durch Störspannungen weitgehend vermieden wird.

Diese Aufgabe wird durch die Merkmale des Patentanspruchs 1 gelöst.

Dem erfindungsgemäßen Verfahren liegt die Erkenntnis zugrunde, daß die Funktionen der Tonrufschaltung durch in der Teilnehmerendstelle bereits vorhandene Einrichtungen übernommen werden kann. So können in Tastwahlapparaten der vorhandene Microprozessor, welcher in ansich bekannter Weise Anzeigeeinrichtungen, Wähleinrichtungen, Speicher in Abhängigkeit von am Tastenfeld eingegebenen Bedienungsfunktionen steuert und der Schwingungserzeuger, welcher zur Erzeugung von mehrfrequenzkodierten Wählzeichen dient, mitverwendet werden. Die für die Unterscheidung zwischen gültigen und ungültigen Rufsignalen und für die Steuerung des tonfrequenten Schwingungserzeugers erforderliche Rechenzeit ist sehr gering und kann von handelsüblichen Microprozessoren, welche beim Mehrfrequenzverfahren eingesetzt werden, ohne weiteres übernommen werden.

Zur Unterscheidung zwischen gültigen und ungültigen Rufsignalen kann der Microprozessor sowohl die Amplitude der zugeführten Rufwechselspannung als auch die Detektion der Frequenz vornehmen. Dadurch wird nicht nur die Falschauslösung infolge von Störspannung weitgehend vermieden, sondern auch die Selektion bei Spannungsspitzen verbessert. Gemäß den Patentansprüchen 2 und 3 erfolgt die Amplitudenerkennung mittels einer Komparatorschaltung oder einer Rücksetzschaltung.

Vorteilhafte Ausgestaltungen der Erfindung sind in den Unteransprüchen angegeben.

Die Schaltungsanordnung zur Durchführung des Verfahrens ist einfach aufgebaut und erfordert einen geringen Schaltungsaufwand.

Die Erfindung wird im folgenden anhand einer Ausführungsform näher beschrieben und erläutert.

Mittels einer in der Teilnehmerendstelle angeordneten Gleichrichteranordnung GR wird aus dem über die Teilnehmerleitung TL zugeführten Rufwechselstrom durch dessen Gleichrichten die Versorgungsspannung $U_b$ erzeugt. Dazu wird die Rufwechselspannung über die Adern a, b den Gabelumschaltkontakten G1, G2 und einer Reihenschaltung von einem Kondensator C1 und einem Widerstand R1 einem Wechselspannungseingang der Gleichrichteranordnung GR zugeführt. Die von der Gleichrichteranordnung GR erzeugte Versorgungsspannung $U_b$ wird einem Siebkondensator C2, einem akustischen Signalelement SE und über Dioden dem Steuerteil ST des Fernsprechapparates, bestehend aus Mikroprozessor MK und einem tonfrequenten Schwingungserzeuger TG, zugeführt. Im Gesprächszustand erfolgt die Speisung des Steuerteils ST aus der Telefonschaltung TT. Der Microprozessor MK ist über eine erste Leitung RD mit einem Anschluß des Kondensators C1 und über eine zweite Leitung MT mit den tonfrequenten Schwingungserzeuger TG verbunden. Der tonfrequente Schwingungserzeuger TG ist über eine dritte Leitung TF mit dem akustischen Signalelement SE verbunden. Das akustische Signalelement SE weist Treiberschaltungen TR1, TR2 und einen diesen nachgeschaltet Piezowandler SU auf.

Die Reihenschaltung aus C1 und R1 dient zur Gleichstromabtrennung des Speisegleichstroms und zur Begrenzug der Amplitude des zugeführten Rufwechselstroms.

Wird nun eine Rufwechselspannung an die Adern a, b angelegt so erzeugt der Microprozessor MK, wenn die Versorgungsspannung $U_b$ der Gleichrichteranordnung GR einen bestimmten Pegel erreicht hat, intern ein Rücksetzsignal und beginnt die Frequenz des über die erste Leitung RD zugeführten Rufsignals zu messen. Stimmt die gemessene Frequenz mit der vorgegebenen Frequenz des Rufsignals (25 Hz oder 50 Hz) überein, so wird über die zweite Leitung MT der tonfrequente Schwingungserzeuger TG angesteuert und das akustische Signalelement SE angeschaltet. Die Ruffolgefrequenz wird dabei ebenfalls von dem Microprozessor MK gesteuert.

Der Microprozessor MK übernimmt also im wesentlichen drei Aufgaben. Einmal die Auswertung der Amplitude der zugeführten Rufwechselspannung, um eine Falschauslösung eines akustischen Rufsignals durch Störspannung weitgehend zu vermeiden, zweitens eine Frequenzdetektion um die Selektion bei Spannungsspitzen zu verbessern und drittens die Steuerung bei der Erzeugung der Ruftonfolge.

Die Auswertung der Amplitude kann neben der bereits geschilderten indirekten Auswertung über den Pegel der Versorgungsspannung $U_b$ auch direkt durch einen Vergleich der über die erste Leitung RD zugeführten Rufwechselspannung mit einer Pegelvorgabe mittels einer Komparatorschaltung erfolgen. Die Frequenzauswertung kann der Microprozessor MK in der Art eines Zähldiskriminators vornehmen.

Als tonfrequenter Schwingungserzeuger können handelsübliche Bausteine eingesetzt werden, welche die benötigten Frequenzen prozessorgesteuert liefern können.

Es hat sich als vorteilhaft erwiesen, daß für die Erkennung der Amplitude des Rufsignals während des Detektionsvorgangs eine Grundlast am Ausgang der Gleichrichteranordnung GR anliegt. Wird diese Grundlast so gewählt, daß diese der durch das akustische Signalelement SE verursachten Last entspricht, so kann durch Wegnahme dieser Grundlast beim Anschalten des Piezowandlers SU vermieden werden, daß in diesem Moment die Versorgungsspannung $U_b$ unter dem Einschaltwert zusammenbricht und der Ruf wieder abgeschaltet wird.

Diese Grundlast kann vorteilhaft von den übrigen Teilen TT des Fernsprechapparats nachgebildet werden, wobei die Abschaltung dieser Grundlast z.B. direkt durch den Mikro-prozessor MK erfolgen kann.

Philips Patentverwaltung GmbH

N.V. Philips' Gloeilampenfabrieken

0190806

PHD 85 304 EP

29.11.1985

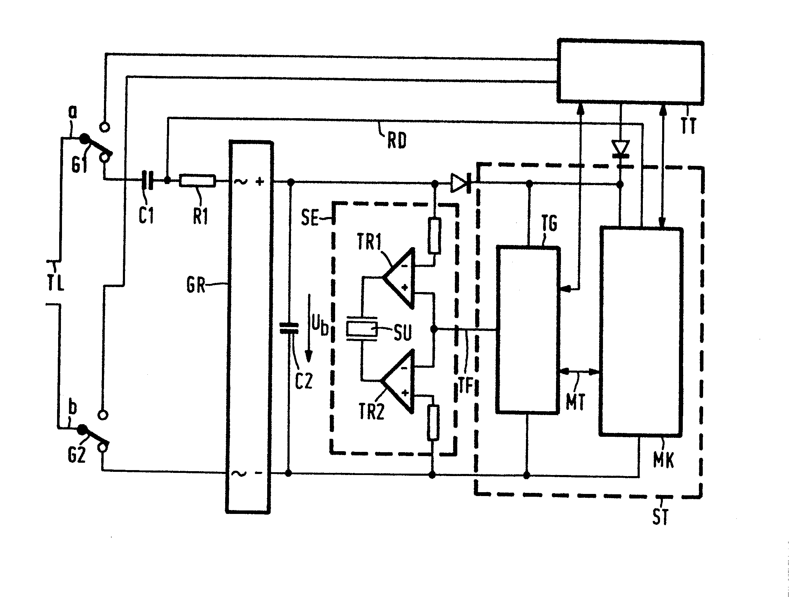

Patentansprüche

1. Verfahren zur Erzeugung eines akustischen Rufsignals in Teilnehmerendstellen von Fernmeldeanlagen, bei dem über Teilnehmerleitungen (TL) der Teilnehmerendstelle ein Rufwechselstrom zugeführt wird, bei dem in der Teilnehmerendstelle eine Gleichrichteranordnung (GR) die Versorgungsspannung ($U_b$) für eine Tonanrufschaltung (MK), einen tonfrequenten Schwingungserzeuger (TG) und ein akustisches Signalelement (SE) durch Gleichrichten des Rufwechselstroms erzeugt und bei dem die Tonanrufschaltung (MK) zur Unterscheidung zwischen gültigen und ungültigen Rufsignalen dient und den tonfrequenten Schwingungserzeuger (TG) steuert, dadurch gekennzeichnet, daß als Tonanrufschaltung ein Microprozessor (MK), welcher in ansich bekannter Weise Anzeigeeinrichtungen, Wähleinrichtung, Speicher in Abhängigkeit von am Tastenfeld eingegebenen Bedienfunktionen steuert, und als Schwingungserzeuger ein ansich bekannter Schwingungserzeuger zur Erzeugung von mehrfrequenzkodierten Wählzeichen verwendet werden.

2. Verfahren nach Anspruch 1, dadurch gekennzeichnet, daß der Microprozessor (MK) zur Detektion von Amplitude und Frequenz der über die Teilnehmerleitung (TL) zugeführten Rufsignale dient, wobei zuerst die Amplitude und dann die Frequenz detektiert wird und wobei die Amplitudenerkennung mittels einer im Microprozessor (MK) angeordneten oder den Mikroprozessor vorgeschalteten Komparatorschaltung erfolgt.

3. Verfahren nach Anspruch 2, dadurch gekennzeichnet, daß die Amplitudenerkennung mittels einer im Microprozessor (MK) angeordneten Rücksetzschaltung beim Hochlaufen der Versorgungsspannung ($U_b$) erfolgt.

4. Verfahren nach Anspruch 1, dadurch gekennzeichnet, daß der Microprozessor (MK) direkt das akustische Signalelement (SE) ansteuert.

5. Verfahren nach Anspruch 1, dadurch gekennzeichnet, daß der tonfrequente Schwingungserzeuger (TG) sowohl für die Ansteuerung des akustischen Signalelements (SE) als auch zur Aussendung der mehrfrequenzkodierten Wählzeichen über die Teilnehmerleitungen (TL) dient, wobei der tonfrequente Schwingungserzeuger (TG) zusammen mit den Microprozessor (MK) in einer integrierten Schaltung angeordnet sein kann, oder getrennte integrierte Schaltung ausgebildet ist.

6. Verfahren nach Anspruch 1 und 2, dadurch gekennzeichnet, daß während der Detektion der Amplitude des über die Teilnehmerleitung (TL) zugeführten Rufstroms ein Teil der Elektronik des Fernsprechapparats (TT) als Grundlast angeschaltet bleibt und daß beim Einschalten des akustischen Signalelements (SE) dieser Teil (TT) von der Spannungsversorgung getrennt wird.

7. Schaltungsanordnung zur Durchführung des Verfahrens nach Anspruch 1, dadurch gekennzeichnet, daß der Microprozessor (MK) über eine erste Leitung (RD) mit der Teilnehmerleitung (TL) in Verbindung steht und über eine zweite Leitung (MT) mit dem tonfrequenten Schwingungserzeuger (TG) verbunden ist und daß der tonfrequente Schwingungserzeuger (TG) über eine dritte Leitung (TF) mit dem akustischen Signalelement (SE) verbunden ist.

0190806

PHD 85304